Europäisches Patentamt

European Patent Office

Office européen des brevets

(19)

(11) Publication number: **0 226 815 B1**

(12) # EUROPEAN PATENT SPECIFICATION

(45) Date of publication of patent specification: **07.04.93**  (51) Int. Cl.5: **A01N 25/04**

(21) Application number: **86115936.6**

(22) Date of filing: **17.11.86**

(54) **A particle growth inhibitor.**

(30) Priority: **26.11.85 JP 265260/85**

(43) Date of publication of application:
**01.07.87 Bulletin 87/27**

(45) Publication of the grant of the patent:
**07.04.93 Bulletin 93/14**

(84) Designated Contracting States:
**DE ES FR GB IT**

(56) References cited:
**EP-A- 0 007 731      EP-A- 0 173 964
DE-A- 3 304 457      GB-A- 806 695
GB-A- 1 047 601      GB-A- 1 551 829
US-A- 3 060 084**

**CHEMICAL ABSTRACTS, vol. 99, no. 19, November 7,1983, page 230, ref. no. 153899u;
Columbus, Ohio, US; & JP - A - 58 131 904**

(73) Proprietor: **Kao Corporation
1-14-10, Nihonbashi Kayaba-cho
Chuo-ku Tokyo(JP)**

(72) Inventor: **Hioki, Yuichi No. 607, New Takano
Royal Heights
5, Tanakakamiohkubo-cho Sakyo-ku
Kyoto-fu Kyoto-shi(JP)**
Inventor: **Hayashi, Hiromitsu
1130, Nishihama
Wakayama-shi Wakayama-ken(JP)**

(74) Representative: **Wächtershäuser, Günter, Dr.
Tal 29
W-8000 München 2 (DE)**

**Description**

BACKGROUND OF THE INVENTION

1) Field of the Invention

This invention relates to a method for stabilizing an aqueous suspension of fine particles of a biocidal substance having at least 50 wt% of particles with a diameter of 0.5 $\mu$ or less. More particularly, the invention relates to a method for stabilizing such an aqueous suspension by adding to it a particle growth inhibitor which is capable of preventing fine particles of a biocidal substance in aqueous suspension from coagulating and growing into a larger particles during storage, thereby maintaining an excellent biocidal efficacy over a prolonged period.

2) Description of the Prior Art

Biocidal agents such as insecticides, germicides, herbicides and miticides are substantially insoluble in water. Therefore they are practically used in an aqueous fluid suspension.

As compared with an emulsion prepared by dissolving a biocidal agent in an organic solvent such as xylene or kerosene, an aqueous fluid suspension has advantages in terms of its storage, cost, environmental pollution and phytotoxicity to crops. In addition, a fluid suspension can be prepared even when there is no organic solvent suitable for a biocidal agent. Furthermore, a fluid suspension is a most suitable form for spraying in the air.

As described above, fluid suspension of biocidal agents have several advantages and various studies have been carried out in order to improve their quality. Nevertheless, a fluid suspension of satisfactory quality has not yet been accomplished because of caking and increase in viscosity caused when it is stored over a prolonged period.

After an earnest study it was found that a biocidal fine powder containing at least 50 wt% of particles with diameter of 0.5 micron or less can be obtained by mixing a dispersion liquid of a biocidal substance with a rigid media having a particle diameter of 0.5 mm or less and that the thus obtained biocidal fine powder exhibits a notably reinforced biological activity.

It was also found that when the thus obtained finely divided biocidal powder is used as an active agent, a suspension for agricultural use can be obtained which has high biocidal effect and prolonged stability, and is free from bottom hard caking or increase in viscosity which are caused by natural precipitation of the biocidal substance in the conventional suspension. Based on these findings an application for patent has been filed (Japanese Patent Application No. 770207/1984).

However, there still remained such a problem that when suspensions of a biocidal substance as described above are stored at a high temperature of 50 °C or were subjected to a cyclical storage test between -5 °C and 50 °C, the particles of a biocidal substance coagulate and grow into a larger ones.

SUMMARY OF THE INVENTION

The continued earnest study by the present inventors has resulted in the finding that the addition of certain compounds as a particle growth inhibitor to finely divided particles of biocidal substances can resolve the aforementioned problem. Such a finding has led to completion of this invention.

The present invention provides a method of preparing a stabilized aqueous suspension of fine particles of a biocidal substance having at least 50 weight-% of particles with a diameter of 0.5 $\mu$m or less and comprising a particle growth inhibitor, which comprises as its essential component one or more of the compounds selected from the group consisting of a water-soluble or water-dispersible polymer containing as its essential constituents at least one compound selected from the monomer group consisting of unsaturated carboxylic acids and their derivatives, said method comprising pulverization of a biocidal substance to obtain an aqueous suspension of said fine particles, whereby said particle growth inhibitor is added to said aqueous suspension of said fine particles after pulverization or in the course of pulverization.

DETAILED DESCRIPTION OF THE INVENTION AND PREFERRED EMBODIMENTS

Illustrated hereinbelow more specifically are the aforementioned particle growth inhibitors.

A water-soluble or water-dispersible polymer containing as its essential constituent at least one compound selected from the monomer group consisting of unsaturated carboxylic acid and their derivatives:

2

The monomers which are used for preparing above polymer include unsaturated monocarboxylic acids such as acrylic acid and methacrylic acid, unsaturated dicarboxylic acids such as maleic acid, as well as derivatives of these acids such as alkyl esters (e.g. methyl esters), the alkali metal salts (e.g. sodium salts), the ammonium salts and the organic amine salts (e.g. triethanolamine salts).

In addition to the above monomers it is possible to add a copolymerizable monomer such as vinyl acetate, isobutylene, diisobutylene or styrene as a copolymer component.

Polymerization of these monomers is performed according to conventional methods. Although there is no restriction to the proportions of monomer components in the polymer and the degree of polymerization, it is necessary that the polymer is water-soluble or water-dispersible.

Examples of these polymers include an acrylic polymer, a methacrylic polymer, a copolymer consisting of acrylic acid and methacrylic acid, a copolymer consisting of acrylic acid and polyoxyethylene methacrylate, a copolymer consisting of acrylic acid and methyl acrylate, a copolymer consisting of acrylic acid and vinyl acetate, a copolymer of acrylic acid and maleic acid, a copolymer consisting of maleic acid and isobutylene, a copolymer consisting of maleic acid and styrene as well as the alkali metal salts, the ammonia salts and the organic amine salts of the above polymers and copolymers. Two or more of these polymers may be used.

The particle growth inhibitor of this invention is added to fine particles of biocidal substance at a ratio by weight of 0.0005/1 to 1/1, preferably 0.001/1 to 0.5/1. The addition is normally conducted after pulverization of biocidal substances, although it may be either before or in the course of the pulverization.

The biocidal substances with which the particle growth inhibitor of this invention is used are not necessarily limited to those having the particle diameter of less than 0.5 micron. It may be effectively used also with biocidal substances having particle diameters of 0.5 to 2 micron. However, the effect of this invention is demonstrated more remarkably with biocidal fine powders containing 50 wt% or more of particles with diameter of 0.5 micron or less. Moreover, aqueous suspensions containing such biocidal fine powders together with a particle growth inhibitor of this invention exhibit an excellent biocidal efficacy.

Fine particles of a biocidal substance to be used for the aforementioned embodiment of this invention may be obtained by pulverizing the biocidal substance which is a water-insoluble, solid or pasty material at normal temperature using the method proposed by the present inventors as has been described earlier in this specification.

Examples of water-insoluble biocidal agents which are solid or pasty at normal temprature include the following germicides, herbicides, insecticides, and miticides:

Germicide: copper agents; organotin agents; organoarsenical agents; organosulfur agents, including sulfur, Dithane (zinc ethylenebis(dithio-carbamate)) and Thiuram (bis(dimethylthiocarbamoyl)-disulfite); organochlorine agents, including Daconil (tetrachloroisophthalonitrile) and Rabcide (4,5,6,7-tetrachlorophthalide); and other agents such as Captan (N-(trichloromethylthio)-4-cyclohexene-1,2-dicarboximide),Difoltan (N-1,1,2,2,- tetrachloroethylthio-4- cyclohexene-1,2- dicarboximide), Acricid (2-sec-butyl-4,6-dinitrophenyl-3-methylcrotonate), Topsin M (dimethyl 4,4'-o-phenylene-3,3'-dithiodiallophanate), Benlate (methyl-1-(butylcarbamoyl)-2-benzimidazole carbamate) and Tachigaren (3-hydroxy-5-methylisoxazole).

Herbicides: diphenylethers such as NIP (2,4-dichlorophenyl p-nitrophenyl ether) and MO (p-nitrophenyl 2,4,6,-trichlorophenyl ether); acid-amides such as Stam (3',4'-dichloropropionanilide) and Dymid (N,N-dimethyl-2,2-diphenylacetamide); carbamates such as Swep (methyl 3,4,-dichlorocarbanilate), ureas such as Kermex D (3-(3,4-dichlorophenyl)-1,1-diethylurea) and triazines such as Simazine (2-chloro-4,6-bis-(ethylamino)-1,3,5-triazine) and Gesaprim (2-chloro-4-ethylamino-6-isopropylamino-1,3,5-triazine).

Insecticides: organochlorines such as DDT (1,1,1-trichloro-2,2-bis(p-chlorophenyl)-ethane), organophosphorous compounds having aromatic rings in their molecule such as Kaya-Ace (p-dimethylsulfamyl phenyldiethyl phosphorothionate) and Gardcide (2-chloro-1-(2,4,5-trichlorophenyl)-vinyldimethyl phosphate), carbamates such as Denapon (1-naphthyl methylcarbamate), Tsumacide (m-tolyl methylcarbamate), Macbal (3,5-xylyl methylcarbamate), Mipcine (o-cumenyl methylcarbamate) and Suncide (o-isopropoxyphenyl methyl-carbamate) and other insecticides such as methaldehyde (tetramer of acetaldehyde) and Lannate (S-methyl N-(methylcalbamoyloxy)-thioacetimidate).

Miticides: Sappiran (p-chlorophenyl p-chlorobenzenesulfonate), Tedion (p-chrolophenyl 2,4,5-trichlorophenyl sulfone), Kelthane (2,2,2-trichloro-1,1-bis(p-chlorophenyl) ethanol), Omite (2-(p-tert-butylphenoxy)cyclohxyl propenyl sulfite) and Plictran (tricyclohexyl hydroxy tin).

The biocidal fine powder of the above substances is preferably manufactured by mixing a dispersion liquid thereof with rigid media having particle diameter of 0.5 mm or less.

A commercially available powder of a biocidal substance may be used for preparing the above dispersion liquid or a commercially available dispersion liquid may be used. It is preferable that the concentration of the biocidal substance in the dispersion liquid is in the range of 5 to 70 wt% and a high

EP 0 226 815 B1

concentration of the biocidal substance is specifically preferable in order to achieve high manufacturing efficiency.

It is preferable that the particle diameter of the media used in this method is 0.5 mm or less, preferably in the range of 0.05 to 0.5 mm. The material for the media may be a rigid member such as Ottawa sand, glass, alumina or zircon, among which the preferable material is glass.

A sand mill, a sand grinder or similar apparatus can be used in pulverizing a mixture containing the biocidal substance and the media. A sand mill or a sand grinder used for this invention may be a generally well known one of either the vertical type or the horizontal type. A disk of the usual type may also be used for this invention.

It is preferable that the temperature is maintained between 5 to 30 °C during the pulverization. A temperature exceeding 30°C is not favorable because at a higher temperatuere the pulverization can be performed only with difficulty and it takes a longer time to complete the pulverization.

In performing the pulverization, the ratio by volume of the media to the biocidal substance should be in the range of 40/60 to 80/20, and preferably is in the range of 60/40 to 70/30.

The biocidal fine powder according to this method is obtained by pulverizing the aforementioned mixture by means of a sand mill as described above, separating media from the biocidal dispersion liquid by pressure filtration or ultracentrifugation, and then washing the media by water as needed.

In the method according to this invention, the particle growth inhibitor may be added to a biocidal agent at any time, but preferably it is added upon completion of pulverization of the biocidal substance. The concentration of the biocidal agent and the particle growth inhibitor in the aqueous suspension may be in the range of 1 to 70 wt% and 0.01 to 30 wt% respectively, remaning portion being water and, as needed, a viscosity increasing agents, etc.

The aqueous suspnsion of biocidal substances containing a particle growth inhibitor according to this invention is extremely stable and is devoid of growth of particles of the biocidal substances during storage of a long period, storage at a high or low temperature, or cyclic storage between low and high temperatures. Futhermore, the suspension exhibits very high biocidal effect.

The invention is hereinafter described by way of examples. The long period stability test method as illustrated below was employed in the examples and comparative examples.

Test Method

An aqeuous suspension of pulverized fine particles of a biocidal substance added with a particle growth inhibitor is left over, cyclically, at 50°C for three days and at -5°C for three days, and changes in particle size distribution on lapse of time is observed.

Example 1

45.5 g of DCMU (herbicide) powder, 50 g of water and 180 g of glass beads (media) of 0.1 to 0.2 mm were mixed , and the mixture was put in a sand grinder of 400 ml capacity (manufactured by Igarashi Kikai) in which a disk was rotated at a peripheral speed of 6 m/sec. for 3 hours. The temperature in the sand grinder was 20 - 25 °C. The thus obtained aqueous suspension of pulverized DCMU was added with 4 g copolymer of acrylic acid and maleic acid (neutralized product of sodium salt, molecular weight: 20,000) which is a particle growth inhibitor according to this invention and the latter was dissolved homogeneously. The suspension thus obtained was stored according to the above Test Method and particle growth was observed by determining the changes in the particle size distribution on lapse of time. The result is shown in Table 1 below.

4

Table 1

1) Pulverised DCMU suspension without
   the particle growth inhibitor.

| | Particle Size Distribution (wt%) | | |
|---|---|---|---|
| Particle Size (micron) | Immediately After Preparation | After Stored 30 Days At -5°C/50°C | After Stored 60 Days At -5°C/50°C |
| more than 1.0 | 0 | 5 | 20 |
| 1.0 - 0.8 | 10 | 18 | 27 |
| 0.8 - 0.6 | 22 | 28 | 39 |
| 0.6 - 0.4 | 36 | 39 | 24 |
| 0.4 - 0.2 | 18 | 10 | 0 |
| 0.2 - 0 | 14 | 0 | 0 |

2) Pulverised DCMU suspension added
   with the particle growth inhibitor.

| | Particle Size Distribution (wt%) | | |
|---|---|---|---|
| Particle Size (micron) | Immediately After Preparation | After Stored 30 Days At -5°C/50°C | After Stored 60 Days At -5°C/50°C |
| more than 1.0 | 0 | 0 | 0 |
| 1.0 - 0.8 | 10 | 10 | 11 |
| 0.8 - 0.6 | 22 | 22 | 24 |
| 0.6 - 0.4 | 36 | 36 | 35 |
| 0.4 - 0.2 | 18 | 18 | 19 |
| 0.2 - 0 | 14 | 14 | 11 |

## Claims

1.  A method of preparing a stabilized aqueous suspension of fine particles of a biocidal substance having at least 50 weight-% of particles with a diameter of 0.5 $\mu$m or less and comprising a particle growth inhibitor, which comprises as its essential component one or more of the compounds selected from the group consisting of a water-soluble or water-dispersible polymer containing as its essential constituents at least one compound selected from the monomer group consisting of unsaturated carboxylic acids and their derivatives, said method comprising pulverization of a biocidal substance to obtain an aqueous suspension of said fine particles, whereby said particle growth inhibitor is added to said aqueous suspension of said fine particles after pulverization or in the course of pulverization.

**2.** A method according to Claim 1, wherein said particle growth inhibitor is added to said aqueous suspension in such an amount as to make its concentration in said aqueous suspension to 0.01 to 30 weight-%.

**Patentansprüche**

**1.** Ein verfahren zum Herstellen einer stabiliesierten wässerigen Suspension feiner Teilchen einer bioziden Substanz, die mindestens 50 Gew.-% Teilchen mit einem Durchmesser von 0,5 $\mu$m oder weniger aufweist und einen Teilchenwachstum-Hemmstoff enthält, der als seine wesentliche Komponente eine oder mehrere Verbindungen umfaßt, die ausgewählt sind aus der Gruppe bestehend aus einem wasserlöslichen oder in Wasser dispergierbaren Polymer, das als seine wesentlichen Bestandteile mindestens eine Verbindung, ausgewählt aus der Monomergruppe bestehend aus ungesättigten Carbonsäuren und deren Derivaten enthält, wobei das Verfahren die Pulverisierung einer bioziden Substanz zur Herstellung einer wässerigen Suspension aus diesen feinen Teilchen umfaßt, wobei der Teilchenwachstum-Hemmstoff zu der wässerigen Suspension der feinen Teilchen nach der Pulverisierung oder während der Pulverisierung hinzugegeben wird.

**2.** Ein Verfahren nach Anspruch 1, worin der Teilchenwachstum-Hemmstoff zu der wässerigen Suspension in einer solchen Menge hinzugegeben wird, daß seine Konzentration in der wässerigen Suspension im Bereich von 0,01 bis 30 Gew.-% liegt.

**Revendications**

**1.** Procédé de fabrication d'une suspension aqueuse stabilisée de fines particules d'une substance biocide ayant au moins 50% en poids de particules d'un diamètre de 0,5 $\mu$m ou au-dessous et comprenant un inhibiteur de croissance des particules, lequel comprend, comme composant essentiel, un ou plusieurs des composés choisis dans le groupe constitué par un polymère soluble dans l'eau ou dispersable dans l'eau, contenant, comme constituants essentiels, au moins un composé choisi dans le groupe de monomères constitué par les acides carboxyliques insaturés et leurs dérivés, ledit procédé comprenant la pulvérisation d'une substance biocide pour obtenir une suspension aqueuse desdites fines particules, ledit inhibiteur de croissance des particules étant ajouté à ladite suspension aqueuse desdites fines particules après la pulvérisation ou au cours de la pulvérisation.

**2.** Procédé selon la revendication 1, dans lequel ledit inhibiteur de croissance des particules est ajouté à ladite suspension aqueuse dans une quantité telle que sa concentration dans ladite suspension aqueuse soit de 0,01 à 30% en poids.